# EUROPÄISCHE PATENTANMELDUNG

(11) **EP 2 275 293 A2**
(43) Veröffentlichungstag der Anmeldung: **19.01.2011**
(21) Anmeldenummer: 10007253.7
(22) Anmeldetag: 14.07.2010
(51) Int. Cl.: B60H 1/22

(54) **Verfahren zur Regelung eines PTC-Heizers und Fahrzeugklimaanlage**

(30) Priorität: 14.07.2009 DE 102009033233; 30.09.2009 DE 102009047771
(71) Anmelder: DBK David + Baader GmbH, 76870 Kandel (DE)
(72) Erfinder: Uhl, Günter, Dr., 74921 Helmstadt-Bargen (DE)
(74) Vertreter: Winter, Brandl, Fürniss, Hübner, Röss, Kaiser, Polte - Partnerschaft

(57) **Zusammenfassung**

Offenbart sind ein Verfahren zur Steuerung eines PTC-Heizers und eine Fahrzeugklimaanlage, die nach einem derartigen Verfahren betreibbar ist. Erfindungsgemäß erfolgt die Regelung der Leistungsaufnahme des PTC-Heizers durch Variation des diesen beaufschlagenden Massenstroms.

## Beschreibung

Die Erfindung betrifft ein Verfahren zur Steuerung eines PTC-Heizers gemäß dem Oberbegriff des Patentanspruches 1 und eine Fahrzeugklimaanlage, die nach einem derartigen Verfahren betrieben wird.

PTC-Luftheizer werden bei vielen Fahrzeugen zur Unterstützung der vorhandenen Kühlwasser-basierten Heizung eingesetzt. Typische Leistungsaufnahmen solcher PTC-Luftheizer liegen zwischen 1000 W und 1500 W, bei einer Betriebsspannung von 13,5 V. Ein derartiger PTC-Luftheizer ist in der EP 0 350 528 B1 offenbart und ist beispielsweise dreistufig aufgebaut, so dass die Leistungsaufnahme des Luftheizers in Stufen an die verfügbare Leistung angepasst werden kann. Bei anspruchsvolleren Anwendungen wird, um immer die maximal mögliche Leistung dem Bordnetz zu entnehmen und somit auch die maximale Heizwirkung zu erzielen, die Leistungsaufnahme des Heizers stufenlos eingestellt. Bei den bekannten Lösungen ist in den Heizer eine Leistungselektronik integriert, die über eine PWM-Steuerung der Lastkreise eine stufenlose Einstellung der Leistungs- bzw. Stromaufnahme des PTC-Luftheizers ermöglicht.

In der DE 100 26 361 A1 ist eine Klimaanlage eines Kraftfahrzeuges gezeigt, bei der ein derartiger PTC-Luftheizer in die Luftführung der Klimaanlage integriert ist, wobei der Luftstrom über ein Gebläse gefördert wird. Zur Einstellung der Lufttemperatur ist stromaufwärts des PTC-Luftheizers eine Stellklappe vorgesehen, über die ein Teil des vom Gebläse geförderten Massenstroms abgezweigt wird, so dass lediglich ein Teilstrom vom PTC-Luftheizer erwärmt wird. Dieser erwärmte Teilmassenstrom wird dann stromabwärts des PTC-Luftheizers mit dem abgezweigten Teilmassenstrom zusammengeführt, wobei die Einstellung der Soll-Temperatur des Gesamtmassenstroms über die Einstellung der Stellklappe und die Regelung der Leistungsaufnahme des PTC-Luftheizers erfolgt.

In der US 6,037,567 ist eine Klimaanlage beschrieben, bei der der Luftstrom zusätzlich zum PTC-Luftheizer auch über den Kühlwasserkreislauf des Verbrennungsmotors erwärmt wird, so dass die Leistungsaufnahme des PTC-Luftheizers bei Erreichen der Betriebstemperatur verringert werden kann.

Bei allen vorbeschriebenen Lösungen ist eine komplexe Leistungselektronik zur Regelung der Leistungsaufnahme der PTC-Luftheizer erforderlich. Die Leistungsaufnahme des PTC-Heizers kann an die verfügbare Leistung, also die Differenz zwischen der vom Generator bei den momentanen Bedingungen (Motordrehzahl, Generator-Temperatur) maximal abgebbaren und der vom restlichen Bordnetz gerade benötigten Leistung angepasst werden. Hierzu kann einem Klimaanlagen-Bediengerät ein entsprechendes Signal bzw. entsprechende Information über einen Daten-Bus über die Generatorauslastung oder die noch verfügbare elektrische Leistung zugeführt werden.

Demgegenüber liegt der Erfindung die Aufgabe zugrunde, ein Verfahren zur Steuerung eines PTC-Heizers zu schaffen, das eine Regelung einer Soll-Temperatur eines Massenstroms mit geringem regelungs- und vorrichtungstechnischen Aufwand ermöglicht. Der Erfindung liegt des Weiteren die Aufgabe zugrunde, eine Fahrzeugklimaanlage zu schaffen, die nach einem derartigen Verfahren betreibbar ist.

Diese Aufgabe wird im Hinblick auf das Verfahren durch die Merkmalskombination des Patentanspruches 1 und im Hinblick auf die Fahrzeugklimaanlage durch die Merkmalskombination des Patentanspruches 6 gelöst.

Vorteilhafte Weiterbildungen der Erfindung sind Gegenstand der Unteransprüche.

Erfindungsgemäß erfolgt die Regelung der Leistungsaufnahme eines PTC-Heizers über den Massenstrom, mit dem der PTC-Heizer beaufschlagt wird. Erfindungsgemäß erfolgt somit eine luftseitige Regelung der Leistungsaufnahme. Dabei macht man sich zu Nutze, dass die von einem PTC-Heizer abgegebene thermische Leistung (aufgenommene elektrische Leistung) nicht nur von der Temperatur des den Heizer durchströmenden Mediums sondern auch vom Massenstrom abhängig ist. Findet nur eine geringe oder keine Durchströmung des PTC-Heizers statt, so wird auch entsprechend keine Wärme von diesem abgeführt und die Temperatur des PTC-Heizers steigt entsprechend an. Entsprechend der Widerstandskennlinie eines derartigen PTC-Heizers (Kaltleiter) steigt aber auch der Widerstand der PTC-Heizelemente an - entsprechend geht die Strom- und damit auch die Leistungsaufnahme des PTC-Heizers zurück, so dass sich bei einer durch Auslegung der PTC-Heizelemente bestimmten Temperatur ein Gleichgewichtszustand einstellt.

Wie erläutert, hängt dieser Gleichgewichtszustand vom Massenstrom des aufzuheizenden Mediums ab, so dass die Leistungsaufnahme des PTC-Heizers relativ einfach durch Variation dieses Massenstroms geregelt werden kann. Eine derartige Lösung erlaubt einen äußerst einfachen Aufbau der Komponenten, da es lediglich erforderlich ist, den PTC-Heizers einzuschalten und dann den Luftstrom entsprechend den oben erläuterten Vorgaben zu regeln.

Die erfindungsgemäße Fahrzeugklimaanlage hat zumindest ein Gebläse zur Einstellung eines Luftstroms, einen PTC-Heizer zum Aufheizen des Luftstroms, einen Massenstromteiler zum Aufteilen des Luftstroms in einen den PTC-Heizer durchströmenden Teilstrom und einen weiteren Teilstrom und eine Steuereinheit zum Einschalten des PTC-Heizers und zur Ansteuerung des Massenstromteilers und/oder des Gebläses derart, dass der PTC-Heizer zur Regelung der Leistungsaufnahme und zur Einstellung einer Soll-Temperatur mit einem vorbestimmten Teilstrom durch- oder angeströmt wird.

Die erfindungsgemäße Fahrzeugklimaanlage lässt sich sowohl bei Antrieben mit Kühlwasserkreislauf und mit Kühlwasserwärmetauscher als auch bei anderen Antriebskonzepten, wie luftgekühlten Motoren oder Elektromotoren oder sonstigen alternativen Antrieben einsetzen.

Dieses erfindungsgemäße Verfahrenskonzept lässt sich in unterschiedlicher Weise anwenden.

Bei einer Variante der Erfindung wird ein Teilstrom des Massenstroms abgezweigt und über den PTC-Heizer geführt und danach wieder mit dem anderen, nicht erwärmten Teilstrom zusammengeführt, wobei das Teilungs- bzw. Mischungsverhältnis zur Einstellung der Soll-Temperatur variiert wird.

Erfindungsgemäß wird es bevorzugt, wenn der zum PTC-Heizer geführte Teilstrom auch einen Wärmetauscher durchströmt, um beispielsweise Kühlwasser Wärme zu entnehmen, so dass bei hinreichender Wärmezufuhr über diesen Wärmetauscher der PTC-Heizer abgeschaltet werden kann.

Bei einer alternativen Einstellung erfolgt die Variation des über den PTC-Heizer geführten Massenstroms durch Variieren des Fördermassens der Fördereinrichtung.

Die erst genannte Variante hat den Vorteil, dass durch die Aufteilung des Massenstroms stets ein hinreichender Luftaustausch in einer Fahrzeugkabine gewährleistet ist. Dies ist bei der zweiten Variante, mit Regelung der Leistungsaufnahme über Veränderung des Fördermassenstroms der Fördereinrichtung nicht gewährleistet, da bei einer geringen Leistungsaufnahme des PTC-Heizers und entsprechend geringem Fördermassenstrom kein ausreichender Luftaustausch in der Fahrzeugkabine gegeben ist. Dementsprechend ist es vorteilhaft, wenn die beiden oben genannten Regelkonzepte miteinander kombiniert werden.

Erfindungsgemäß ist es vorgesehen, den PTC-Heizer abzuschalten, wenn über den zusätzlichen Wärmetauscher hinreichende Wärme eingebracht werden kann.

Der Vorteil des beim erfindungsgemäßen Verfahren und bei der erfindungsgemäßen Fahrzeugklimaanlage verwendeten PTC-Heizers besteht darin, dass dieser nicht mit einer Leistungselektronik ausgeführt sein muss, sondern lediglich ein- oder ausgeschaltet wird, während die Einstellung der Leistungsaufnahme durch Variation des über den PTC-Heizers geführten Massenstroms erfolgt.

Die erfindungsgemäße Fahrzeugklimaanlage kannmit geeigneten Sensoren ausgeführt sein, um den Fördermassenstrom der Fördereinrichtung, die Temperaturen der Massenströme und die Einstellung des Massenstromteilers zu erfassen.

Der Massenstrom muss jedoch nicht von Sensoren erfasst und gemessen werden, da dieser abhängig ist von der Drehzahl des Gebläses in der Klimaanlage. Diese wird überlicherweise durch Verändern der Versorgungsspannung des Gebläsemotors (mit Hilfe eines Linearreglers oder durch PWM) beeinflusst. Eine Erhöhung der Gebläsedrehzahl bewirkt eine Erhöhung des Massenstroms - dabei ist eine genaue Kenntnis der Drehzahl bzw. des Massenstroms nicht erforderlich. Wird z.B. die Gebläsedrehzahl erhöht, so erhöht sich auch der Massenstrom durch den PTC-Heizer. Dieser wird in Folge dessen mehr elektrische Leistung aufnehmen bzw. mehr Wärme an den Massenstrom abgeben. Dadurch wiederum wird die Generatorauslastung erhöht. Die Steuereinheit wird nun so lange die Gebläsedrehzahl weiter erhöhen, bis die Generatorauslastung einen vorbestimmten Maximalwert erreicht. Wird im Weiteren dieser Maximalwert überschritten, z.B. da die Drehzahl des Verbrennungsmotors sinkt oder andere Verbraucher im Bordnetz mehr Leistung aufnehmen, so wird die Steuereinheit die Gebläsedrehzahl so lange reduzieren, bis wieder der Vorgabewert erreicht wird.

Bevorzugte Ausführungsbeispiele der Erfindung werden im Folgenden anhand schematischer Zeichnungen näher erläutert. Es zeigen:
Figur 1 eine Prinzipskizze eines Teils einer Fahrzeugklimaanlage und
Figur 2 ein stark vereinfachtes Ablaufdiagramm einer Variante des erfindungsgemäßen Verfahrens.

Die Erfindung wird im Folgenden anhand einer Fahrzeugklimaanlage beschrieben, über die einer Fahrzeugkabine zuzuführende Luft klimatisiert wird. Die Erfindung ist jedoch keinesfalls auf derartige Anwendungen beschränkt, sondern kann allgemein bei Problemstellungen verwendet werden, bei denen es darauf ankommt, einen Massenstrom (gasförmig, flüssig) mit geringem regelungstechnischen und vorrichtungstechnischen Aufwand zu erwärmen.

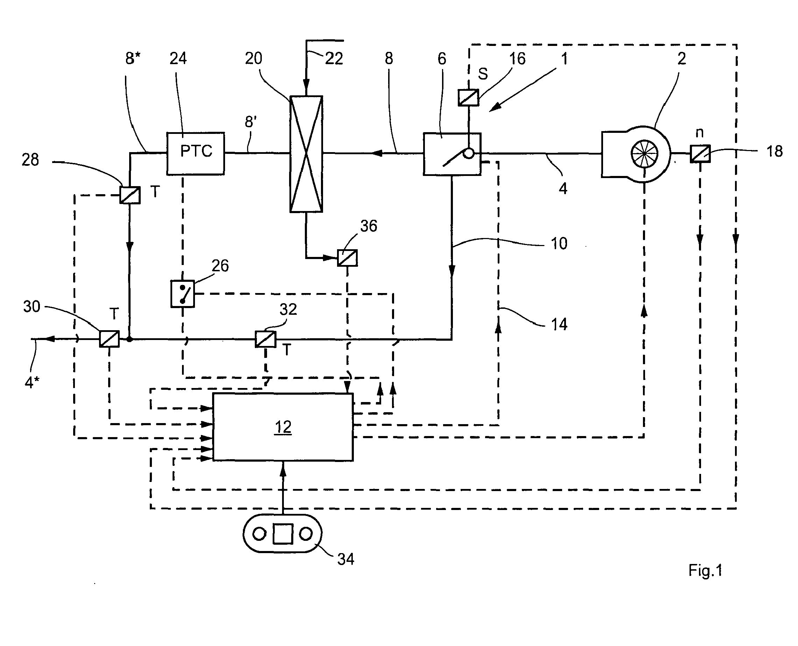

Figur 1 zeigt ein Schaubild desjenigen Teils einer Fahrzeugklimaanlage, in dem die der Fahrzeugkabine zuzuführende Luft erwärmt wird. Gemäß Figur 1 hat diese Heizseite der Fahrzeugklimaanlage 1 ein Gebläse 2, über das ein Luftmassenstrom 4 innerhalb eines Luftführungsschachtes der Klimaanlage 1 erzeugt werden kann. Stromabwärts des Gebläses 2 ist ein Massenstromteiler, beispielsweise eine Stellklappe 6 vorgesehen, über die der Massenstrom 4 in einen Teilstrom (warm) 8 und einen Bypass -Strom (kalt) 10 aufgeteilt werden kann. Die Einstellung der Stellklappe 6 kann über eine zentrale Steuereinheit 12 der Klimaanlage 1 verändert werden, die über eine Signalleitung 14 mit der Stellklappe 6 verbunden ist. Die Stellung der Stellklappe 2 wird über einen Positionssensor 16 erfasst und zur Steuereinheit 12 gemeldet. In entsprechender Weise kann die Drehzahl n des Gebläses 2 über einen Drehzahlsensor 18 aufgenommen und ebenfalls zur Steuereinheit 12 gemeldet werden - wie vorstehend ausgeführt, ist in die direkte Überwachung der Gebläsedrehzahl jedoch nicht erforderlich.

Stromabwärts der Stellklappe 6 ist ein Wärmetauscher 20 vorgesehen, über den dem Kühlwasserkreislauf 22 des Verbrennungsmotors Wärme zum Vorerwärmen des Teilstroms 8 entzogen werden kann. Der derart vorerwärmte Teilstrom 8' durchströmt dann einen PTC-Heizer 24, dessen Grundaufbau bespielsweise in dem eingangs genannten EP-Patent beschrieben ist. Ein derartiger PTC-Heizer 24 hat eine Vielzahl von PTC-Widerstandselementen, deren bei Bestromung entstehende Wärme über Radiatoren mit großer Wärmeaustauschfläche an den Teilstrom 8' abgegeben wird. Der erfindungsgemäße PTC-Heizer 24 ist ohne eine Leistungselektronik ausgeführt und wird lediglich über einen Schalter 26 ein- oder ausgeschaltet, wobei die Ansteuerung des Schalters 26 über die Steuereinheit 12 erfolgt. Die Stromversorgung des PTC-Heizers 24 erfolgt vorzugsweise direkt aus dem Bordnetz und nicht über die Steuereinheit 12. Diese kann beispielsweise ein Relais oder einen Halbleiterschalter ansteuern, der direkt im PTC-Heizer 24 untergebracht sein kann.

Die Temperatur des über den PTC-Heizer 24 erwärmten Teilstroms 8* wird über einen Temperatursensor 28 erfasst und zur Steuereinheit 12 gemeldet. Dieser Teilstrom 8* wird dann stromabwärts des PTC-Heizers 24 mit dem Bypass-Strom 10 zusammengeführt, wobei je nach Ausführung über weitere Temperatursensoren 30, 32 die Temperaturen des erwärmten Gesamtmassenstroms 4* und/oder des Bypass-Stroms 10 erfasst werden kann und ebenfalls zur Steuereinheit 12 gemeldet wird. Die Sollwerteinstellung der Temperatur erfolgt über ein Klimaanlagen-Bediengerät 34 durch den Fahrer. Der Gesamtmassenstrom 4* wird dann in die Fahrgastzelle eingeleitet.

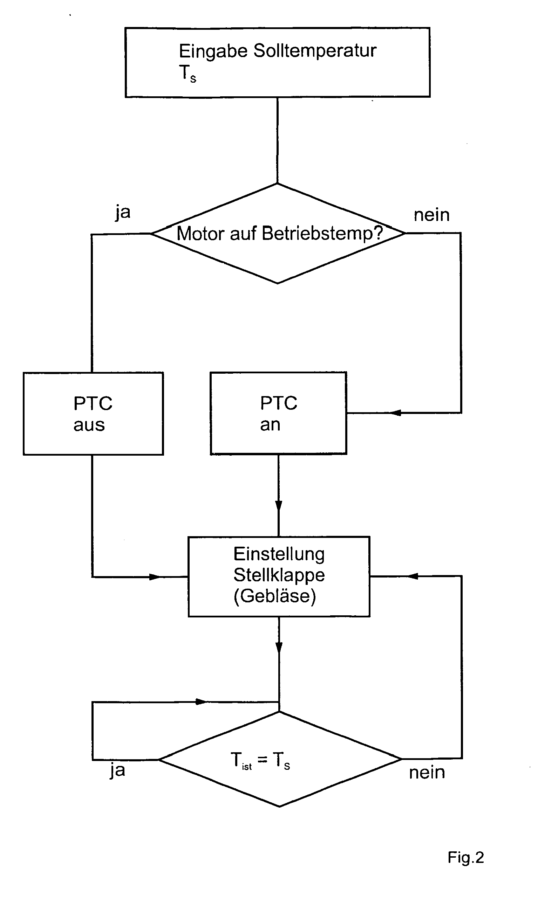

Ein Betriebsmodus zur Einstellung des Luftmassenstroms 4* in Abhängigkeit von der am Bediengerät 34 eingestellten Temperatur wird anhand des Ablaufschemas in Figur 2 erläutert.

Zunächst erfolgt am Bediengerät 34 die Eingabe der Soll-Temperatur T_{S}, d.h. die der in der Fahrerkabine gewünschten Innentemperatur entspricht. Gemäß dem dargestellten Regelalgorithmus wird zunächst geprüft, ob der Motor bereits die Betriebstemperatur erreicht hat. Dies kann beispielsweise durch Erfassung der Temperatur des Kühlwassers 22 mittels eines weiteren Temperatursensors 36 erfolgen, dessen Ausgangssignal an die Steuereinheit 12 gemeldet wird. In dem Fall, in dem die Betriebstemperatur unterhalb eines vorbestimmten Sollwertes liegt, wird über die Steuereinheit 12 der Schalter 26 geschlossen, so dass der PTC-Heizer 24 bestromt wird. Kurz nach Start des Motors wird dem Teilstrom 8 über den Wärmetauscher 20 nur wenig oder gar keine Wärme zugeführt, so dass die Aufheizung zunächst im Wesentlichen über den PTC-Heizer 24 erfolgt. Bei dieser Variante ist das Gebläse 2 auf eine vorbestimmte, im Wesentlichen konstante Drehzahl eingestellt. Die Variation des über den PTC-Heizer 24 geführten Luftstroms erfolgt durch Einstellung der Stellklappe 6 und somit durch Variation des Teilstroms (warm). Im realen Betrieb ist davon auszugehen, dass bei eingeschaltetem PTC-Heizer 24 und sehr niedriger Kühlwassertemperatur die Ist-Temperatur deutlich unter der eingestellten Soll-Temperatur liegt. In diesem Fall werden die Heizsysteme, d.h. der PTC-Heizer 24 und der Wärmetauscher 20 mit maximal möglicher Leistung betrieben. Ein Abregeln der Heizleistung findet nicht statt. Die Stellklappe 6 wird in diesem Betriebsmodus "Aufheizen des Fahrgastraums auf Soll-Temperatur" nur zum Einstellen der Leistungsaufnahme des PTC-Heizers 24 verwendet. Sobald die Soll-Temperatur erreicht ist, kann über die Einstellung der Stellklappe 6 die Temperatur geregelt werden. Gemäß Figur 1 wird dann bei abgeschaltetem PTC-Heizer 24 die Ist-Temperatur T_{IST} des Teilstroms 8* erfasst und mit der Soll-Temperatur T_{S} verglichen. Falls die Ist-Temperatur nicht der Soll-Temperatur entspricht, wird die Einstellung der Stellklappe 6 so lange verändert, bis der Teilstrom 8* eine der vom Fahrer eingestellten Wunschtemperatur entsprechende Soll-Temperatur T_{S} erreicht hat. Diese Temperaturüberwachung wird dann in regelmäßigen Zeitabständen wiederholt und ggf. durch Veränderung der Stellklappenstellung korrigiert.

Sobald der Motor seine Betriebstemperatur erreicht hat, kann über den Kühlwasserkreislauf genügend Wärme zugeführt werden, so dass dann über die Steuereinheit 12 ein Signal zum Öffnen des Schalters 26 abgegeben wird und der PTC-Heizer 24 stromlos geschaltet wird - die Erwärmung des Teilstroms 8 erfolgt dann nur noch über den Wärmetauscher 20.

Beim anhand Figur 2 beschriebenen Ausführungsbeispiel erfolgt die Variation des den PTC-Heizer 24 zugeführten Luftmassenstroms 4 über die Einstellung der Stellklappe 6. Alternativ kann die Variation dieses Luftmassenstroms 4 auch durch entsprechende Regelung der Gebläsedrehzahl n erfolgen, wobei kein Bypass-Strom 10 abgezweigt wird. Prinzipiell ist es auch möglich, beide Regelstrategien (Einstellung der Stellklappe 6, Regelung der Gebläsedrehzahl) miteinander zu kombinieren.

Die Regelstrategie besteht im allgemeinen Sinn darin, zusätzliche elektrische Leistung zur Verfügung zu stellen, solange über den Kühlwasserkreislauf nicht genügend Wärme zur Verfügung gestellt wird, so dass der Fahrzeuginnenraum möglichst rasch erwärmt werden kann, ohne das Bordnetz zu überlasten.

Das Bediengerät 34 bzw. die Steuereinheit 12 erhält alle vorbeschriebenen Informationen (Drehzahl des Gebläses 2, Stellung der Stellklappe 6, Temperaturen des Kühlwassers, der Luft, Außentemperatur sowie die im Bordnetz noch verfügbare Leistung als absoluter Leistung- oder Stromwert oder als Maß für die Generatorauslastung (DF-Signal) über einen in Figur 1 nicht dargestellten Datenbus, der in der Regel als CAN-Bus ausgeführt ist. Dabei kann zur Realisierung des erfindungsgemäßen Konzepts im Prinzip auf vorhandene Komponenten der Klimaanlage zugegriffen werden, so dass der vorrichtungstechnische Aufwand minimal ist.

Das erfindungsgemäße Konzept ermöglicht eine exakte Einstellung der in die Fahrzeugkabine einströmenden Luft durch stufenlose Einstellung des den PTC-Heizer 24 beaufschlagenden Luftmassenstroms. Dabei ist es besonders vorteilhaft, dass dieser nicht - wie bei herkömmlichen Lösungen - mehrstufig aufgebaut sein muss, sondern dass zum Steuern dieses PTC-Heizers 24 lediglich der Ein-Aus-Schalter 26 erforderlich ist und somit auf eine aufwendige Leistungselektronik verzichtet werden kann.

Offenbart sind ein Verfahren zur Steuerung eines PTC-Heizers und eine Fahrzeugklimaanlage, die nach einem derartigen Verfahren betreibbar ist. Erfindungsgemäß erfolgt die Regelung der Leistungsaufnahme des PTC-Heizers durch Variation des diesen beaufschlagenden Massenstroms.

### Bezugszeichenliste

- 1: Klimaanlage
- 2: Gebläse
- 4: Luftmassenstrom
- 6: Stellklappe
- 8: Teilstrom, warm
- 10: Bypass-Strom, kalt
- 12: Steuereinheit
- 14: Signalleitung
- 16: Wegesensor
- 18: Drehzahlsensor
- 20: Wärmetauscher
- 22: Kühlwasser
- 24: PTC-Heizer
- 26: Schalter
- 28: Temperatursensor
- 30: Temperatursensor
- 32: Temperatursensor
- 34: Bediengerät
- 36: Temperatursensor

## Patentansprüche

1. Verfahren zur Steuerung eines PTC-Heizers, über den ein von einer Fördereinrichtung (2) geförderter Massenstrom (4) eines Mediums, beispielsweise zu klimatisierende Luft oder Kühlwasser, aufgeheizt wird, **dadurch gekennzeichnet, dass** die Leistungsaufnahme des PTC-Heizers (24) zur Einstellung einer Soll-Temperatur (T_{S}) über den Massenstrom (4) geregelt wird.

2. Verfahren nach Patentanspruch 1, wobei ein Teilstrom (8) des Massenstroms (4) abgezweigt und über den PTC-Heizer (24) geführt und danach wieder mit dem anderen Teilstrom (10) zusammengeführt wird.

3. Verfahren nach Patentanspruch 2, wobei der abgezweigte Teilstrom (8) einen Wärmetauscher (20) durchströmt.

4. Verfahren nach einem der Patentansprüche 1 bis 3, wobei der von der Fördereinrichtung (2) geförderte Massenstrom (4) zur Einstellung der Leistungsaufnahme des PTC-Heizers (24) geregelt wird.

5. Verfahren nach Patentanspruch 3 oder 4, wobei eine Soll-Temperatur (T_{S}) des Massenstroms (4) bei abgeschaltetem PTC-Heizer (24) und hinreichender Wärmeaustauschleistung des Wärmetauschers (20) durch Einstellung des Teil massenstroms (8) geregelt wird.

6. Fahrzeugklimaanlage mit einem Gebläse (2) zur Einstellung eines Luftmassenstroms (4), einem PTC-Heizer (24) zum Aufheizen des Luftmassenstroms (4), einem Massenstromteiler (6) zum Aufteilen des Luftmassenstroms (4) in einen den PTC-Heizer (24) durchströmenden Teilstrom (8) und einen weiteren Teilstrom (10) und mit einer Steuereinheit (12) zum Einschalten des PTC-Heizers (24) und zur Ansteuerung des Massenstromteilers (6) und/oder des Gebläses derart, dass der PTC-Heizer (24) zur Regelung der Leistungsaufnahme und zur Einstellung einer Soll-Temperatur (T_{S}) mit einem vorbestimmten Teilstrom (8) bzw. Massenstrom durchströmt ist.

7. Fahrzeugklimaanlage nach Patentanspruch 6, mit Temperatursensoren (28, 30, 32; 36) zur Erfassung der Temperatur der Stoffmassenströme.

8. Fahrzeugklimaanlage nach Patentanspruch 6 oder 7, mit einem Kühlwasserwärmetauscher (20) zum Erwärmen des Luftmassenstroms (4).
